# EUROPEAN PATENT SPECIFICATION

(11) **EP 1 168 814 B1**
(45) Date of publication and mention of the grant of the patent: **02.07.2008**
(21) Application number: 01115376.4
(22) Date of filing: 26.06.2001
(51) Int. Cl.: H04N 1/193, H04N 1/04

(54) **Image processing apparatus and processing method therefor**
Bildverarbeitungsvorrichtung und Verarbeitungsverfahren dafür
Dispositif de traitement d'image et procédé de traitement pour ceci

(30) Priority: 27.06.2000 JP 2000193376; 21.06.2001 JP 2001188236
(43) Date of publication of application: 02.01.2002
(73) Proprietor: CANON KABUSHIKI KAISHA, Ohta-ku, Tokyo (JP)
(72) Inventor: Hanabusa, Mitsugu, c/o Canon Kabushiki Kaisha, Tokyo (JP)
(74) Representative: TBK-Patent

(56) References cited:
- EP-A- 0 752 784
- WO-A-99/31870
- DE-A- 19 835 348
- US-A- 4 772 958
- US-A- 5 528 642
- US-A- 5 812 284
- PATENT ABSTRACTS OF JAPAN vol. 2000, no. 02, 29 February 2000 (2000-02-29) & JP 11 308409 A (CANON INC), 5 November 1999 (1999-11-05)

## Description

The present invention relates to an image processing apparatus for reading an image signal and outputting it and a processing method for the apparatus.

An image reader, which scans an original in the main scanning direction with a line image sensor (to be referred to as a CCD hereinafter), and at the same time, relatively scans the CCD or the original in the sub-scanning direction (a direction perpendicular to the CCD element arrays), thereby obtaining two-dimensional image information, is known. An example of this type of image reader uses a technique of improving the image read resolution by increasing the number of CCD elements and arranging them in a staggered pattern (refer to Japanese Patent Laid-Open No. 57-141178, Japanese Patent Publication No. 59-6666, and the like).

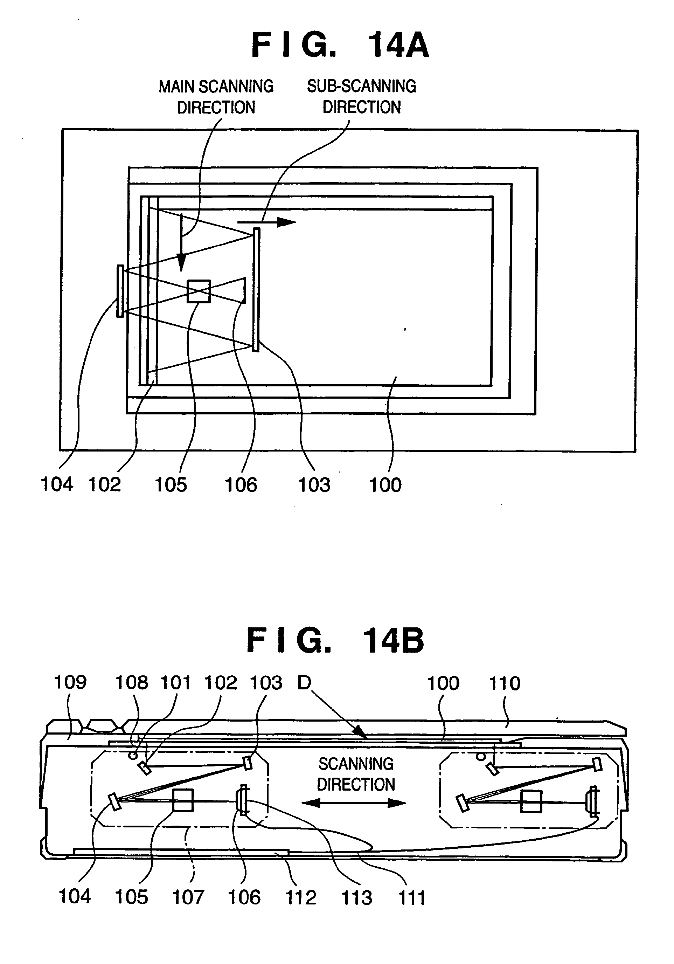

The arrangement and operation of a standard scanner using a CCD having a staggered pattern will be described with reference to Figs. 14 to 20. Figs. 14A and 14B show a flat bed scanner and, more specifically, an example of an arrangement for reading a reflected original. Fig. 14A is a plan view of the scanner. Fig. 14B is a side view of the scanner. Reference symbol D denotes an original to be read which is placed on an original glass table 100. A light source 101 irradiates the original D with light. The resultant reflected light is reflected by mirrors 102, 103, and 104 and formed into an image on a CCD 106 through a lens 105. A read unit 107 on which the light source 101, mirrors 102, 103, and 104, lens 105, and CCD 106 are fixed is scanned (sub-scanned) parallel to the original glass table 100 from the left to the right in Fig. 14A to read the entire original D, thereby obtaining a 1-page image signal from the CCD 106. A CCD board 113 on which the CCD 106 is mounted is connected to a main board 112 fixed to the image reader through a cable 111. As shown in Fig. 14A, the downward direction is the main scanning direction, and the leftward direction is the sub-scanning direction. This scanner is covered with an outer cover 109 and original press member 110 to shield the original against external light.

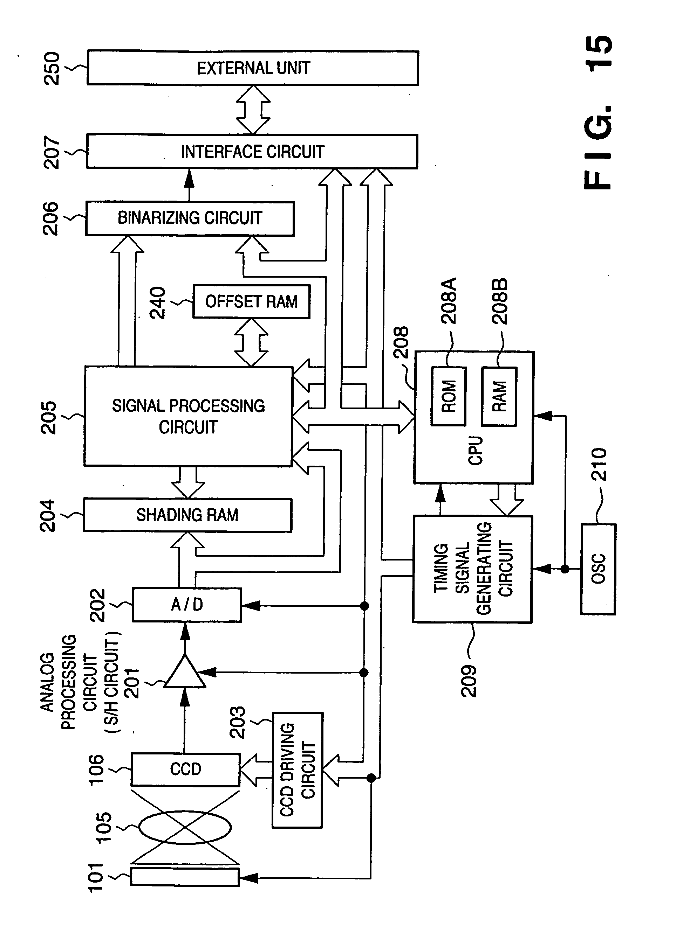

Fig. 15 is a block diagram showing control on the operation of the image reader. The electrical signal obtained by photoelectric conversion using the CCD 106 is subjected to gain control in an analog processing circuit 201 including a sample/hold circuit (S/H circuit) such as a CDS (Correlated Double Sampling circuit). The resultant signal is then digitized by an A/D converter 202. Reference numeral 204 denotes a shading RAM (Random Access Memory) for storing the light distribution characteristics of the optical system; and 205, an signal processing circuit comprised of a circuit for controlling the shading RAM 204 storing shading correction coefficients and a circuit for controlling enlargement and reduction of image data, i.e., a control circuit for an offset RAM 240 for image read and write. Shading correction is performed by the shading RAM 204. The correction data generated on the basis of shading data obtained by reading a main scanning white reference plate 108 prior to image reading operation is stored in the shading RAM 204. The signal processing circuit 205 using the offset RAM 240, performs not only correction of R, G, and B line offsets but also thinning processing and interpolation processing on the basis of the read image data in magnifying (reducing/enlarging) operation.

Reference numeral 206 denotes a binarizing circuit for binarizing an image signal; and 207, an interface circuit for receiving control signals from a external unit 250 such as a personal computer and outputting image signals.

Reference numeral 208 denotes a CPU (Central Processing Unit) in the form of a microcomputer having a ROM 208A storing a control program and a RAM 208B serving as a work area. The CPU 208 controls the respective components in accordance with the control program stored in the ROM 208A. Reference numeral 209 denotes a timing signal generating circuit for frequency-dividing an output from a quartz oscillator 210 in accordance with the setting in the CPU 208 and generating various types of timing signals.

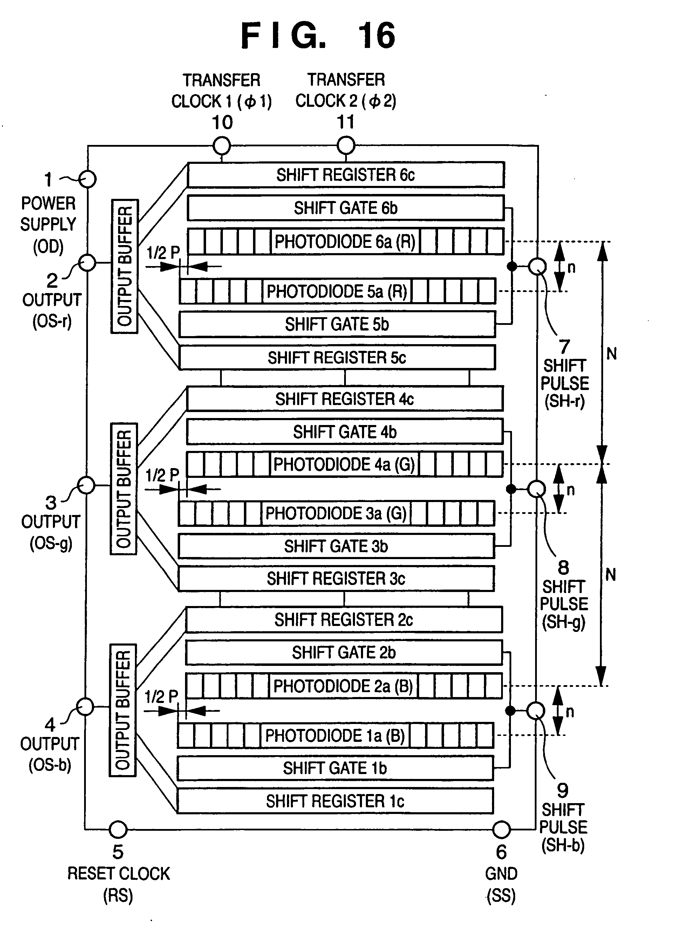

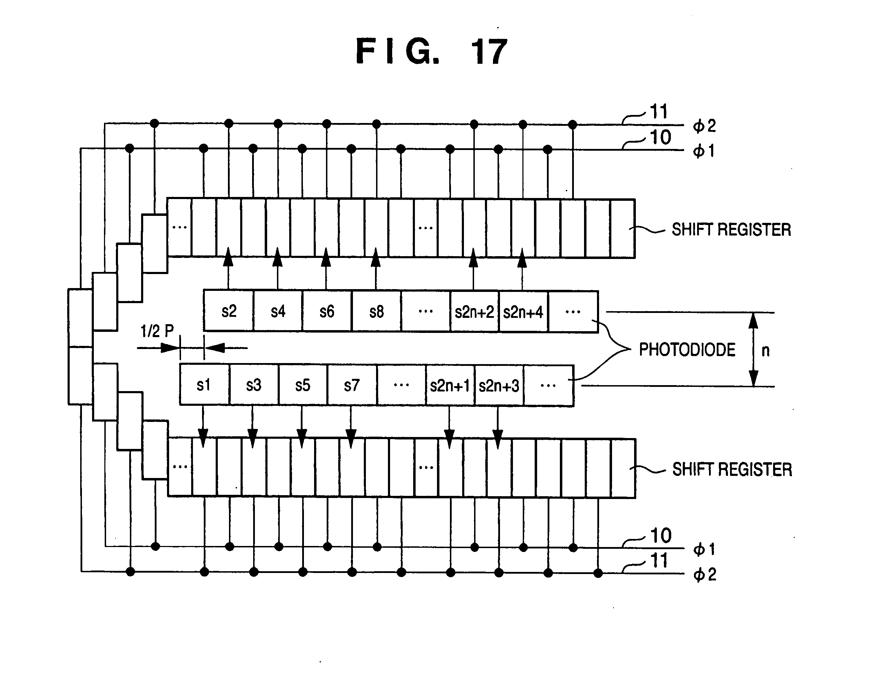

Fig. 16 shows the arrangement of a color CCD having a staggered element pattern in which two arrays of photodiodes as photoelectric conversion elements are arranged for each color, and the elements are shifted from each other by 1/2 the element length (to be referred to as 1/2P hereinafter) in a staggered pattern. Fig. 17 shows the relationship between photodiodes, shift registers, and first and second transfer clocks (φ1, φ2) for one of R, G, and B.

As shown in Figs. 16 and 17, two arrays of photodiodes 5a and 6a are spaced from each other by a distance corresponding to n lines in a sub scanning direction. Image data in the respective element arrays are transferred to shift registers 5c and 6c through shift gates 5b and 6b in accordance with shift pulses SH-r (7). The image data transferred to the shift registers 5c and 6c are sequentially input to an output buffer in accordance with first and second transfer clocks. In this case, the image data from the photodiodes 5a and 6a are alternately and sequentially transferred to the output buffer, and output from a CCD output OS-r2 in response to each reset clock RS5. The same applies to G and B.

The image data transferred to the output buffer are output from CCD outputs OS-g3 and OS-b4 for each reset pulse RS in accordance with the first and second transfer clocks. As a result, as CCD outputs OS-r2, OS-g3, and OS-b4, image data shifted from each other by N lines are output.

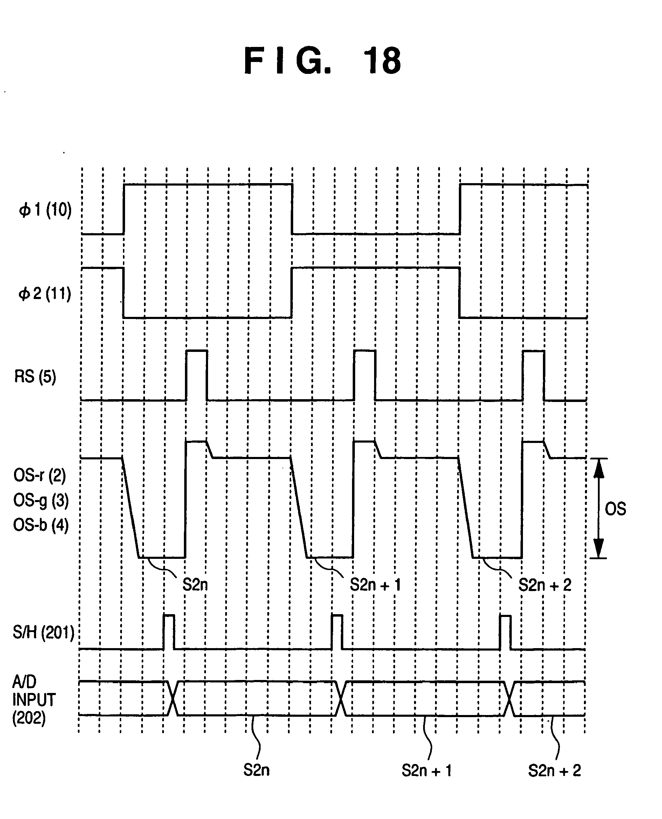

Fig. 18 shows an example of the drive timing of the CCD 106 and analog processing circuit 201. Fig. 18 shows the CCD drive timings of φ1(10), φ2(11), and RS(5), the CCD outputs OS-r2, OS-g3, and OS-b4, an S/H pulse signal in the analog processing circuit for processing the image signals, and the input timing with respect to the A/D converter 202.

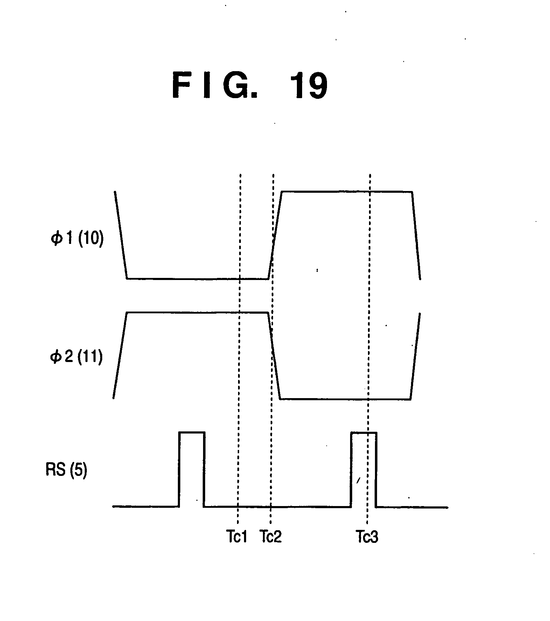

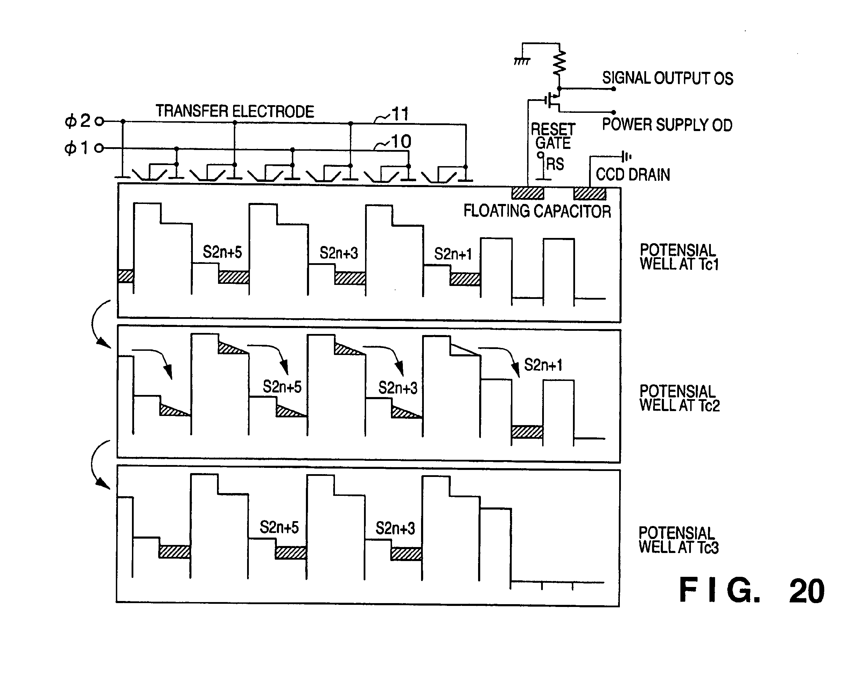

The CCD operation defined by the timings of the transfer clocks φ1(10) and φ2(11) and reset pulse RS(5) will be described with reference to Figs. 19 and 20. Image data is transferred to a floating capacitor in accordance with the transfer clocks φ1(10) and φ 2(11) for driving a transfer electrode and converted into a voltage signal to be output as a signal output OS. At timing Tc1, in Fig. 19, the potential wells of the odd-numbered element array shift register having, image data S2n+1, S2n+3,... are sequentially transferred, as shown in Fig. 20. In a state immediately after the reset gate has shifted from the ON state to the OFF state by a reset pulse, no image data is present in the floating capacitor. At timing Tc2, the potential wells in the odd-numbered element array shift register having, the image data S2n+1 is transferred to the floating capacitor. At timing Tc3, the reset gate is turned on by a reset pulse, and the image data S2n+1 in the floating capacitor is reset. In this manner, image data are alternately transferred from the respective shift registers of the odd- and even-numbered element arrays to the floating capacitor, and the data from the signal output OS is updated by a reset pulse.

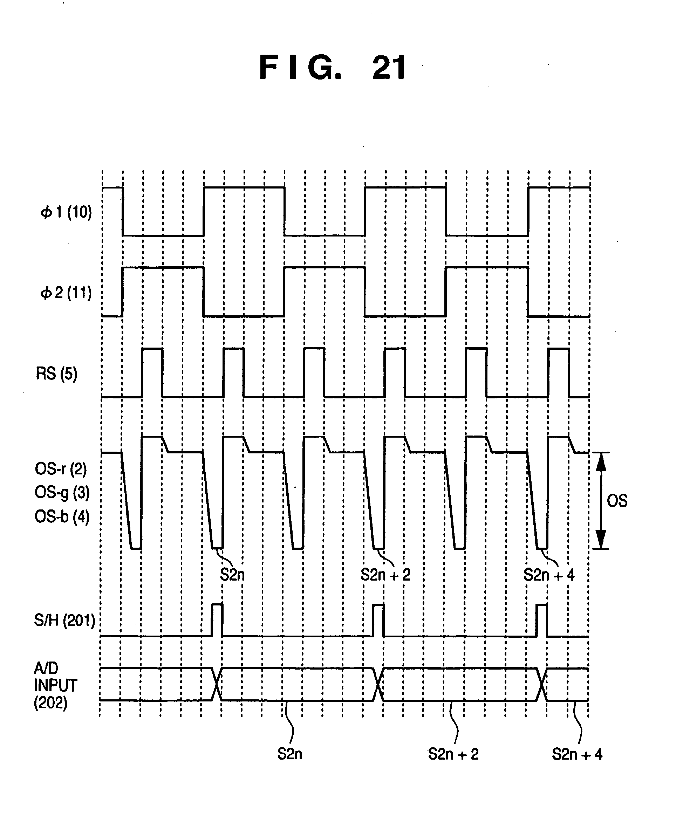

At a low resolution equal to or less than 1/2 a basic resolution, data is read from one element array in Fig. 16, as shown in Fig. 21. In this case, the maximum operation frequency of φ1 and φ2 is doubled to match the write speed of the RAM with that of the basic resolution, and image data read out after being thinned out by the analog processing circuit 201 (Japanese Patent Laid-Open No. 8-9143). Immediately after a signal is output from each shift register to the output buffer, the output buffer is reset, resulting in a great decrease in CCD output interval. This makes it very difficult to ensure linearity of image data. According to the arrangement of this image reader and the driving method for the reader, the storage time of the low-resolution mode becomes 1/2 that of the high-resolution mode. If, therefore, the storage time remains unchanged, the read speed of the low-resolution mode must be decreased. That is, it is difficult to make the storage time of the high-resolution mode equal to that of the low-resolution mode and realize high-speed reading operation in the low-resolution mode.

Document WO 99/31870 discloses a spatially offset, row interpolated image sensor including a linear array sensor having a first row of longitudinally extending pixels with a first spatial periodicity and a second row of longitudinally extending pixels having a second spatial periodicity laterally adjacent to the first row and longitudinally staggered with respect to the first row; and a read circuit for individually, selectively sampling pixels of the rows for producing a composite output which has a combined spatial periodicity which is shorter than either of the first and second spatial periodicities and has a number of samples equal to the combined samples of both the rows.

Furthermore, JP 11 308490 A discloses an image reader and a method for image reduction reading to quicken an image read time of a reduced image by controlling a storage time of image data by a storage section to be one over an integer, summing the image data by pluralities of stored pixels and outputting the summed data as an output signal of a line image sensor at once.

It is an object of the present invention to provide an image processing apparatus and processing method therefor, which can satisfy both the requirements for the balance between the storage time in the high-resolution mode and that in the low-resolution mode and high-speed reading operation in the low-resolution mode.

This object is solved according to what is defined in the appended independent claims. Advantageous modifications are set forth in the appended dependent claims.

Other features and advantages of the present invention will be apparent from the following description taken in conjunction with the accompanying drawings, in which like reference characters designate the same or similar parts throughout the figures thereof.
Fig. 1 is a timing chart showing CCD driving operation for reading out data from only an odd-numbered element array of the first embodiment;
Fig. 2 is a timing chart showing CCD driving operation for reading data from only an even-numbered element array of the first embodiment;
Fig. 3 is a timing chart showing CCD driving operation in a basic resolution mode to explain the first embodiment;
Fig. 4 is a timing chart showing CCD driving operation in a basic resolution mode of the prior art compared with the first embodiment;
Fig. 5 is a timing chart showing CCD driving operation in a low-resolution mode to explain the first embodiment;
Fig. 6 is a view showing read image areas in the basic resolution mode to explain the first embodiment;
Fig. 7 is a block diagram showing the internal structure of a CCD to explain the second embodiment of the present invention;
Fig. 8 is a schematic diagram of photodiode portions and shift register portions in the CCD in Fig. 7;
Fig. 9 is a timing chart for explaining CCD driving operation using the arrangement in Fig. 7;
Fig. 10 is a view for explaining operation in the CCD at the CCD driving timing in Fig. 9;
Fig. 11 is a timing chart for explaining CCD driving operation using the arrangement in Fig. 7;
Fig. 12 is a timing chart for explaining another CCD driving operation using the arrangement in Fig. 7;
Fig. 13 is a timing chart for explaining still another CCD driving operation using the arrangement in Fig. 7;
Figs. 14A and 14B are schematic views of an image reader;
Fig. 15 is a block diagram of a circuit for controlling the image reader;
Fig. 16 is a block diagram showing the internal structure of a CCD to explain the prior art;
Fig. 17 is a wiring diagram of photodiode portions and shift register portions in the CCD in Fig. 16;
Fig. 18 is a view for explaining an example of a conventional CCD element array;
Fig. 19 is a timing chart showing CCD driving operation to explain the prior art;
Fig. 20 is a view for explaining operation in the CCD at a CCD driving timing according to the prior art; and
Fig. 21 is a timing chart showing CCD driving operation with a resolution 1/2 the basic resolution to explain the prior art.

Embodiments of the present invention will be described below with reference to the accompanying drawings.

### (First Embodiment)

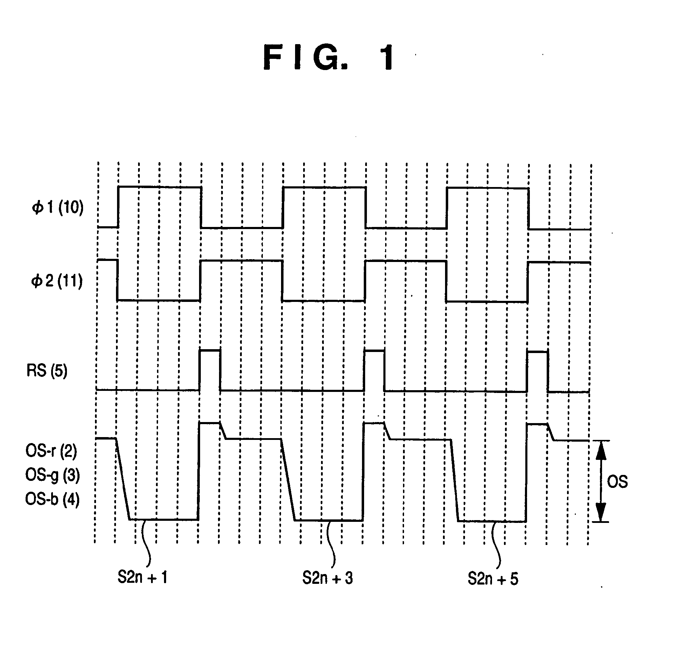

A scanner according to the first embodiment of the present invention will be described with reference to Figs. 1 to 4.

Since the mechanical and electrical arrangements of the scanner according to this embodiment are the same as those shown in Figs. 14 to 17, a description thereof will be omitted.

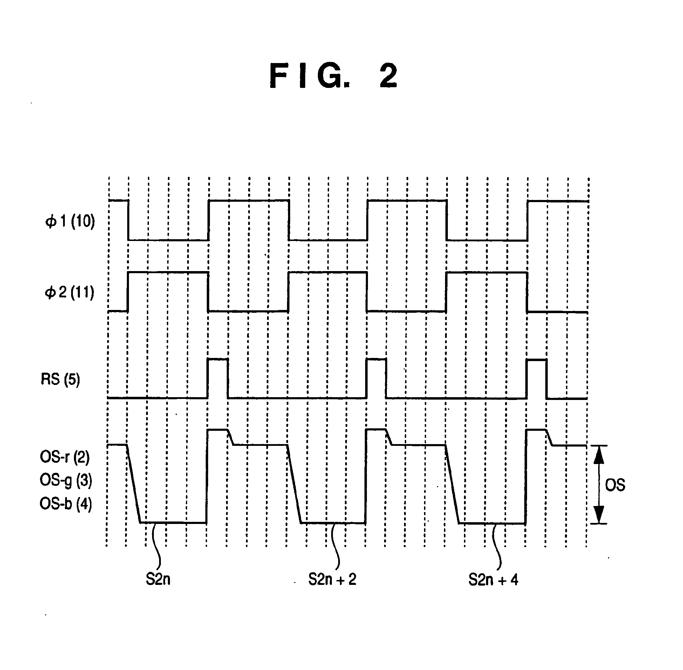

Figs. 1 and 2 are timing charts showing transfer clocks φ1 and φ2 and reset clock RS according to this embodiment, and an output signal OS-r (OS-g and OS-b) as the result obtained by driving shift registers using these clocks.

Fig. 1 will be described first. Referring to Fig. 1, like Fig. 18, the transfer clocks φ1 and φ2 have opposite phases. At the leading edge of the clock φ1, image data in the odd-numbered elements (image data stored in the lower shift register in Fig. 17) is outputted to the output buffer. At the trailing edge of the clock φ1, image data in the even-numbered elements (image data in the upper shift register in Fig. 17) is outputted to the output buffer.

The reset clock RS goes HIGH at the instant when φ1 = LOW and φ2 = HIGH. With this operation, the image data in the even-numbered elements is reset at the same time it is outputted to the output buffer, and hence is not output from the CCD. As a consequence, as indicated by the lowermost level in Fig. 1, only the image data from the odd-numbered elements are output from the CCD.

In contrast to this, in the case shown in Fig. 2, the reset clock RS goes HIGH at the instant when φ1 = HIGH and φ2 = LOW. With this operation, the image data from the odd-numbered elements are reset at the same time it is outputted from the shift register to the output buffer, and hence is not outputted from the CCD. As a consequence, as indicated by the lowermost level in Fig. 2, only the image data from the even-numbered elements is outputted from the CCD.

As shown in Figs. 1 and 2, the CCD can selectively output only the image data read byeither the odd or even photodiode arrays. And then, even if the frequencies of the transfer clocks φ1 and φ2 and reset clock RS are increased twice those in the prior art, sufficient output time can be ensured for image data in each element which is outputted from the output buffer. More specifically, as compared with the case shown in Fig. 21 in which image in all the elements are outputted from the CCD and thinned out by the S/H circuit, with the operation shown in Figs. 1 and 2, the interval between the instant at which image data is outputted from the shift register to the output buffer and the instant at which the image data is reset is long, and hence the precision of outputting data from the CCD (output buffer) improves.

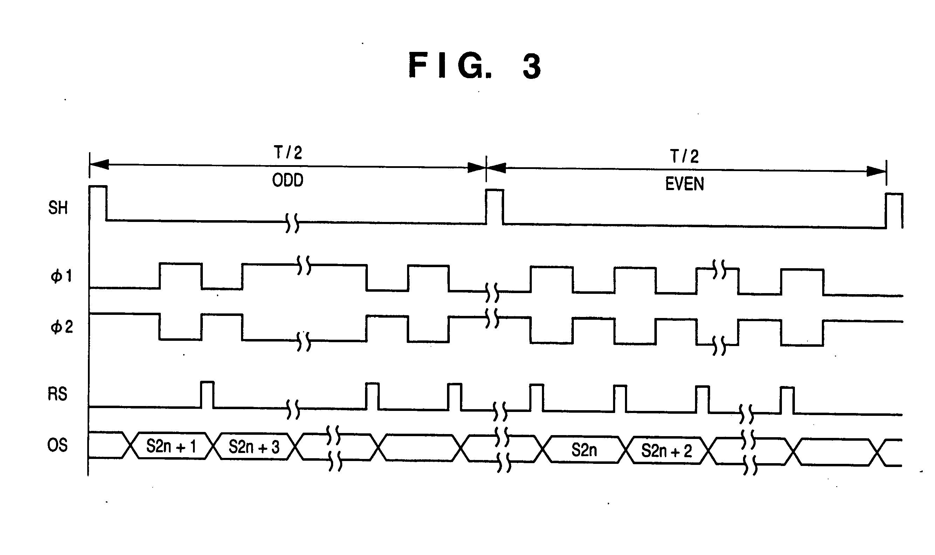

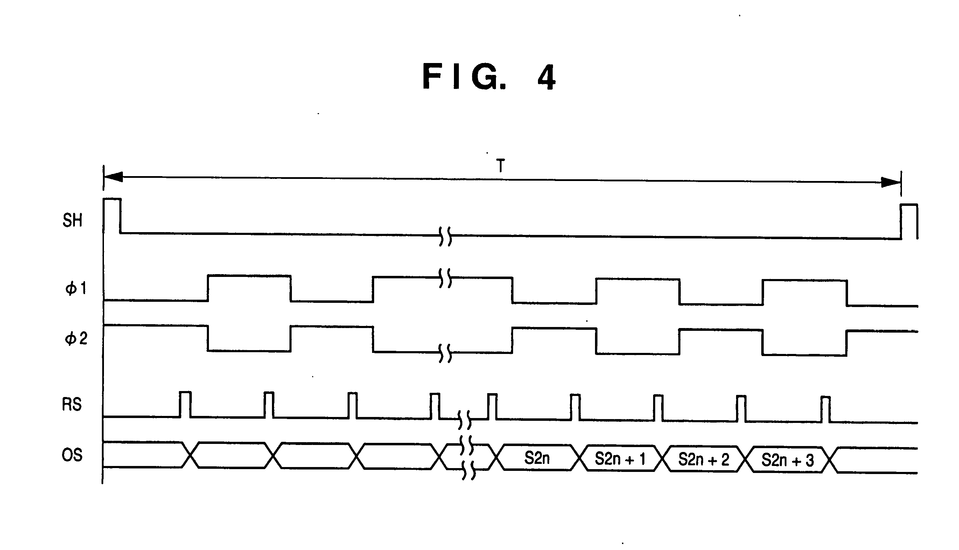

Fig. 3 is a timing chart showing a case where an image is read in a high-resolution mode by driving the respective clocks at the timings shown in Figs. 1 and 2. In this embodiment, as shown in Fig. 3, first, the respective clocks are driven as shown in Fig. 1 to continuously output only the image data in the odd-numbered element array of the CCD to the memory. The respective clocks are then driven as shown in Fig. 2 to continuously output the image data in the even-numbered element array to the memory. Fig. 4 is a timing chart showing how data is read by driving the respective clocks in the prior art. "T" in Fig. 4 indicates the time required to output image data from the CCD to the memory from all the elements arranged in a staggered pattern. Referring to Fig. 3, the frequencies of the respective clocks are increased to twice those in the prior art to output from the CCD, the image data in the odd-numbered elements, in the time interval of T/2, and output the image data from the CCD in the even-numbered elements in the next time interval of T/2. In the high-resolution mode, therefore, the data in all the photoelectric conversion elements of the two arrays can be outputted in the same period of time as that in the prior art. Even if a limitation is imposed on the DRAM access time on the digital circuit, and the same CCD output timing as that of the prior art is required, data can be read in a storage time 1/2 of that of the prior art.

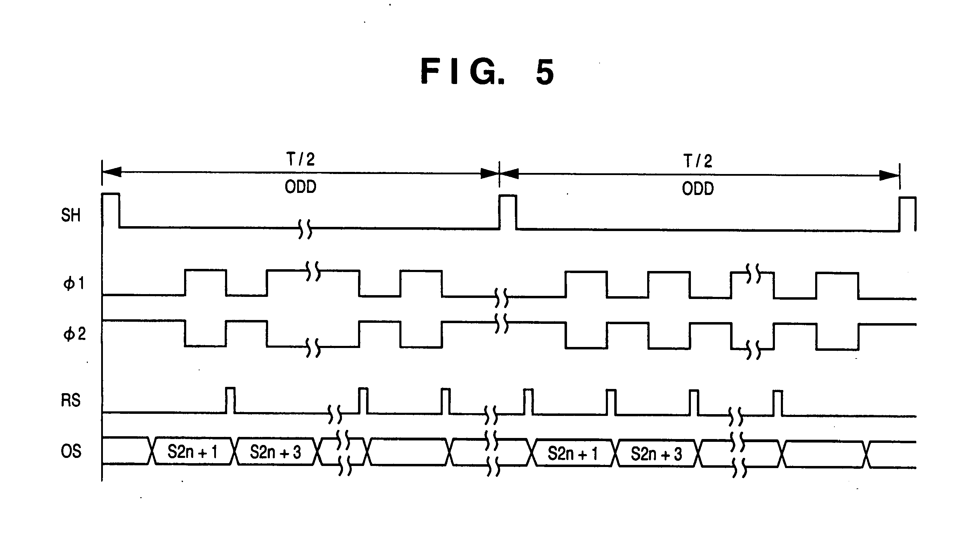

Fig. 5 is a timing chart showing how an image is read in a low-resolution mode of this embodiment. In this embodiment, in the low-resolution mode, the respective clocks are always driven as shown in Fig. 1 to output only the image data in the odd-numbered elements from the CCD. Obviously, the present invention is not limited to this, and the respective clocks may always be driven as shown in Fig. 2 to output from the CCD only the image data in the even-numbered elements. In addition, in the low-resolution mode, since the CCD moves in the sub-scanning direction at a speed twice that of the high-resolution mode, data can be read at high speed.

Furthermore, since the frequencies of the respective clocks remain the same in the high-resolution mode and low-resolution mode, the storage time also remains the same.

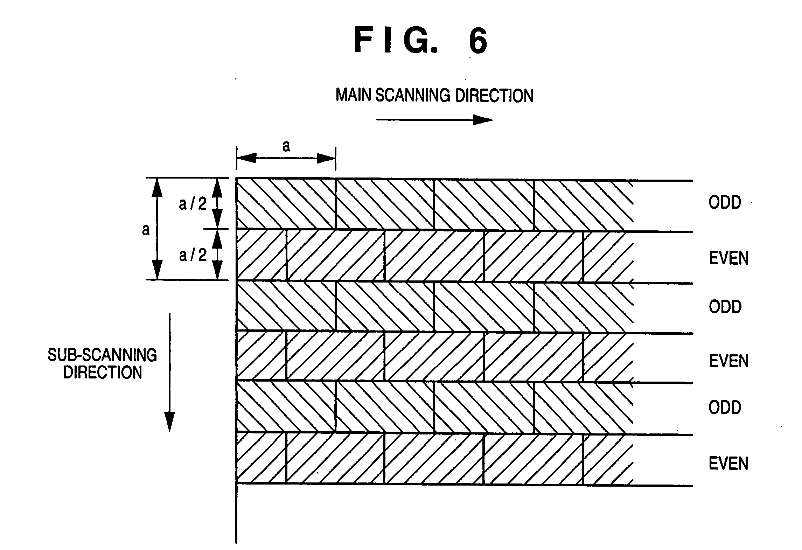

If a distance between the odd and even photodiode arrays comprising a x a photodiodes is set to an odd multiple of a/2, and the CCD is driven in the same manner as in this embodiment, read areas like those shown in Fig. 6 can be obtained.

According to the arrangement of the image reader using the CCD having a staggered pattern according to this embodiment and the driving method for the image reader, data can be read from either the odd-numbered element array or even-numbered element array in the staggered pattern, and element addition is allowed in the shift register unit to read data from the CCD in 1/2 the storage time of the prior art in the basic resolution (high-resolution) mode. In the mode of reading data with a resolution 1/2 that of the basic resolution mode, data can be read in the same storage time as that of the basic resolution mode. Therefore, the same original can be read in a time 1/2 the read time of the basic resolution mode.

Therefore, both the requirements for the balance between the storage time in the high-resolution mode and that in the low-resolution mode and high-speed reading operation in the low-resolution mode can be satisfied.

### (Second Embodiment)

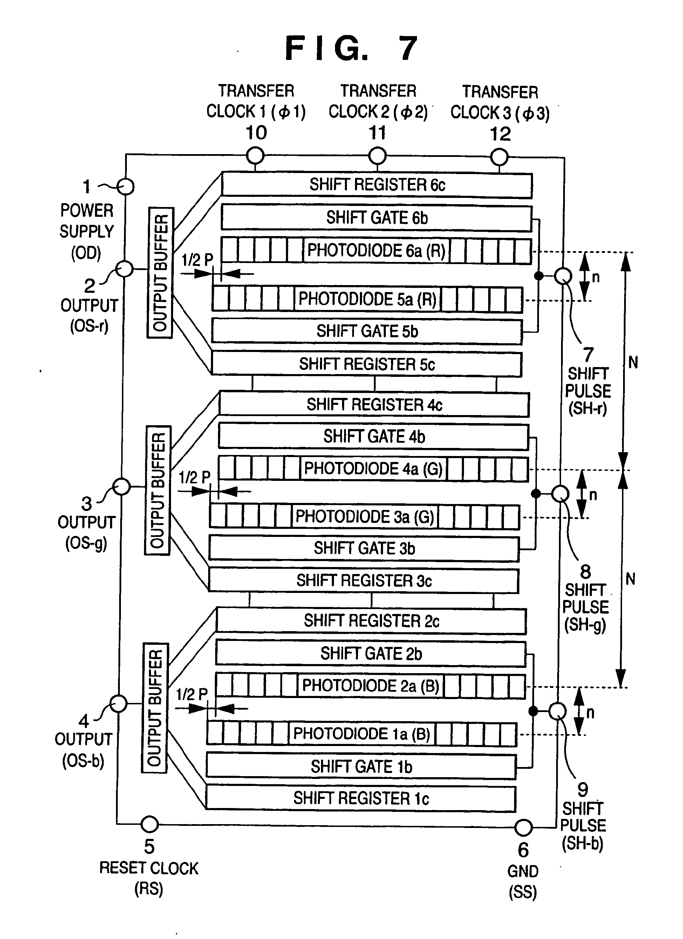

A scanner according to the second embodiment of the present invention will be described next with reference to Figs. 7 to 13. The mechanical arrangement of the scanner according to this embodiment is the same as that shown in Figs. 14 and 15, and hence a description thereof will be omitted.

Fig. 7 is a view showing the CCD arrangement according to the second embodiment in the image processing apparatus according to the present invention.

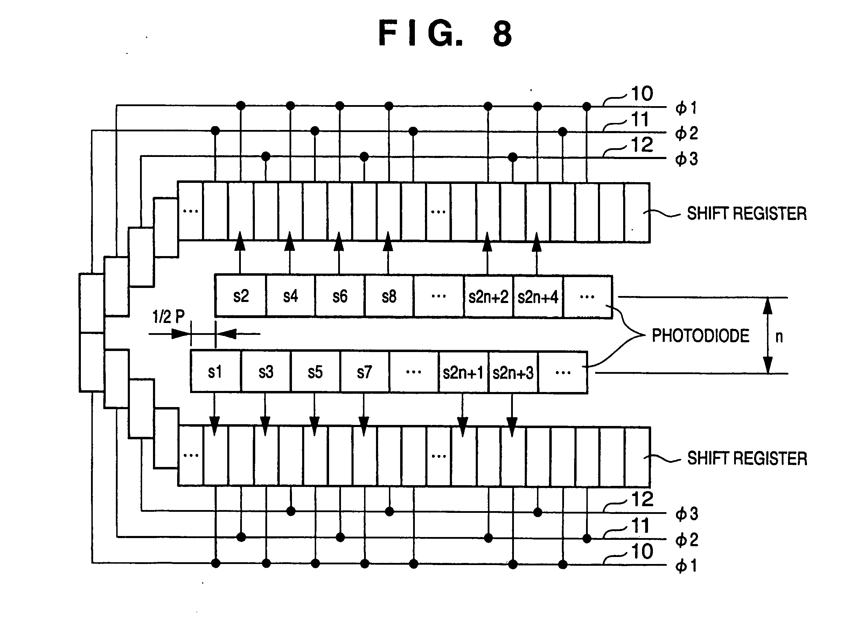

Like Fig. 16, Fig. 7 shows the arrangement of the color CCD having a staggered arrangement in which two arrays of photodiodes are arranged for each color, and the respective elements are shifted from each other by 1/2 the element length in a staggered pattern. This scanner has a first transfer clock 10 (φ1), second transfer clock 11 (φ2), and third transfer clock 12 (φ3). Fig. 8 is a view showing the relationship between the photodiodes, shift registers, first transfer clock (φ1), second transfer clock (φ2), and third transfer clock (φ3) for one color of R, G, and B. The number of shift registers is twice or more that of photodiodes.

Referring to Fig. 7, in the photosensitive portion for R, photodiode arrays 5a and 6a are arranged at a distance n from each other. Image data in the respective element arrays are transferred to shift registers 5c and 6c through shift gates 5b and 6b in accordance with shift pulses SH-r (7). The image data transferred to the shift registers 5c and 6c are sequentially transferred in response to the first, second, and third transfer clocks φ1, φ2, and φ3. The image data is alternately and sequentially inputted from the photodiode arrays 5a and 6a to the output buffer. The arrangements and operations of the photosensitive portions for G and B are the same as those described above for R. Since these photosensitive portions are spaced apart from each other by N lines as shown in Fig. 7, image data shifted from each other by N lines are output as CCD outputs OS-r (2), OS-g (3), and OS-b (4).

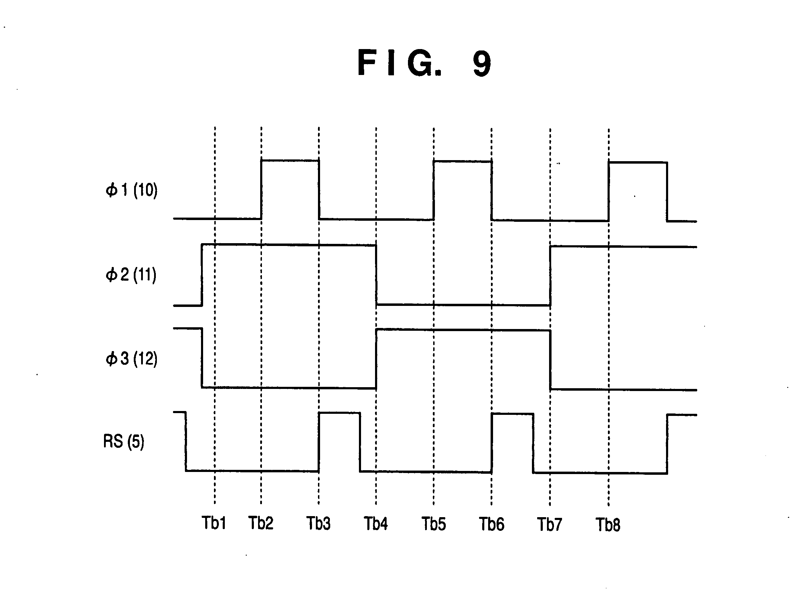

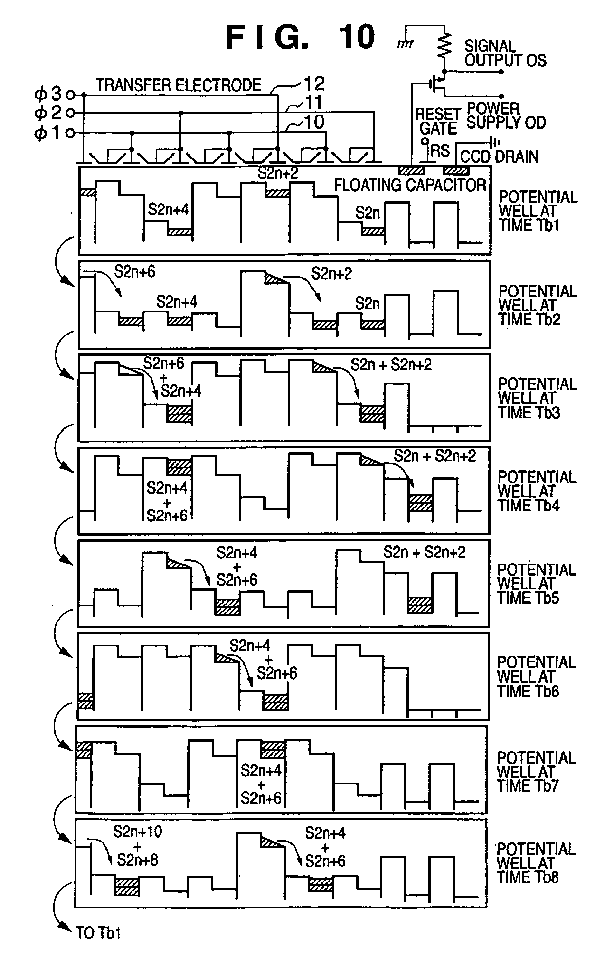

A method of reading image information with a resolution 1/4 or less than the basic resolution of the scanner using the CCD shown in Figs. 7 and 8 will be described with reference to Figs. 9 and 10.

Fig. 9 is a timing chart for explaining the timings of the transfer clocks φ1, φ2, and φ3 and a reset pulse RS in this embodiment. In the embodiment, the frequency of the transfer clock φ1 is set to be twice that of each of the transfer clocks φ2 and φ3, and the image data in the odd-numbered element array is reset by the reset pulse RS to be discarded.

Fig. 10 is a view showing the states of potential wells and data transfer at each timing in Fig. 9. In the shift register for the even-numbered element array, at timing Tb1 in Fig. 9, image data S2n, S2n+2,... before element addition in the shift register portion, are secured in the potential wells, as indicated by the uppermost level in Fig. 10. Since the reset gate has been turned on by a reset pulse immediately before this state, no image data exists in the floating capacitor.

At a timing Tb2, the transfer clock φ1 goes HIGH to transfer image data S2n+2, S2n+6, and S2n+10 without transferring image data S2n, S2n+4, and S2n+8. At a timing Tb3, the reset gate is turned on by a reset pulse to reset the image data in the floating capacitor. At the same time, only the image data S2n+2, S2n+6, and S2n+10 transferred at the timing Tb2 are further transferred to be added to the image data S2n, S2n+4, and S2n+8, respectively.

At timings Tb4 and Tb5, the added image data are shifted on the shift register. At these timings, as shown in Fig. 10, the image data S2n+S2n+2 is shifted to the floating capacitor to electrically connect a power supply OD to a signal output OS, thereby outputting a signal OS.

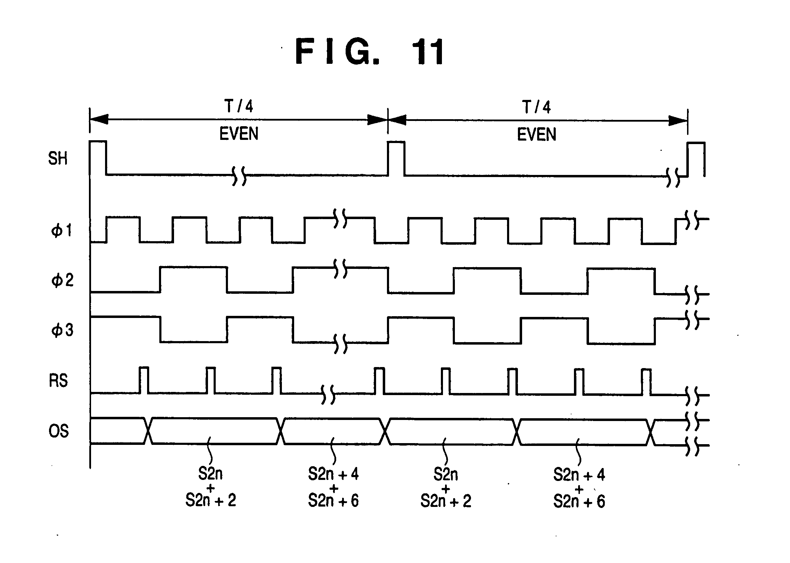

At a timing Tb6, the reset gate is turned on by a reset pulse to reset the image data in the floating capacitor, and the added image data is shifted on the shift register. At timings Tb7 and Tb8, the added image data are shifted on the shift register. As a consequence, the same state as that at the timing Tb2 is set. Subsequently, as the timings are sequentially set, Tb3 → Tb4 → ..., the added image data is sequentially output from the CCD as outputs OS. Thus, data can be output from the CCD as shown in Fig. 11.

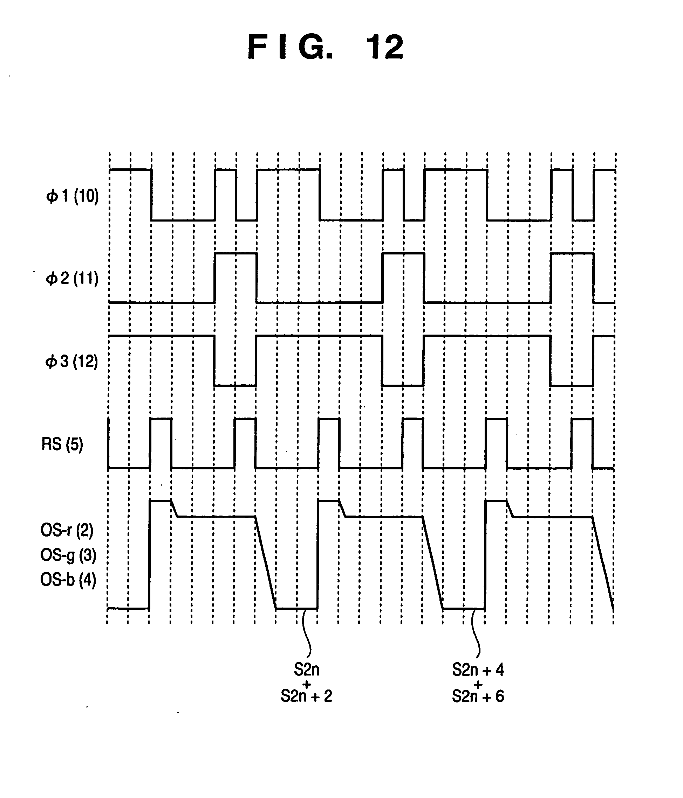

Fig. 12 shows a preferable embodiment of the 1/4-resolution read mode. In this preferable embodimentclocks φ1, φ2, φ3, and RS is driven tochange potential state in a cycle of Tb2 → Tb3 → Tb5 → Tb6 → Tb2 → Tb3 →..., in Fig. 9, with an omission of an illustration concerning the timings Tb1, Tb4, Tb7, and Tb8, so that data-can be efficiently shifted and the precision in outputting data from the output buffer can be improved when compared with Fig. 9.

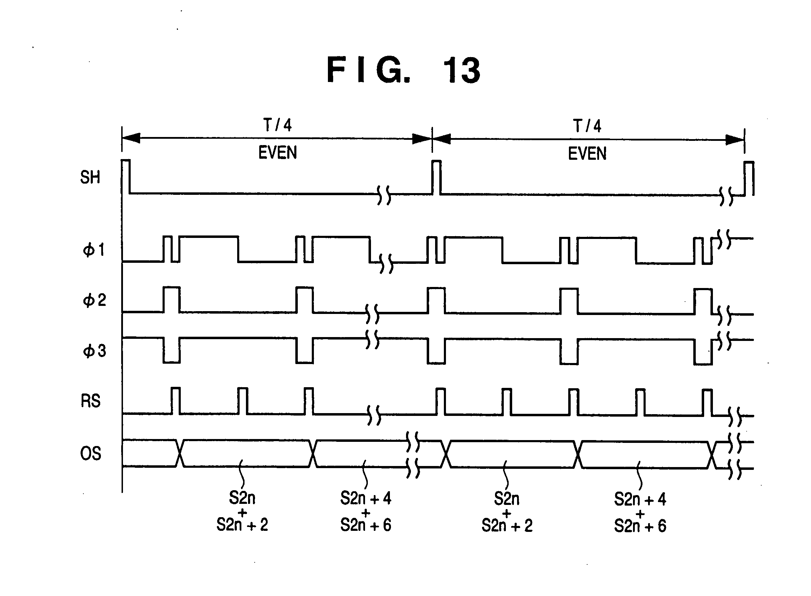

According to the operation of this embodiment, the signals obtained by adding data in adjacent elements in the even-numbered element array is sequentially output as the CCD outputs OS-r, OS-g, and OS-b. By adding adjacent image data, data having a resolution 1/4 that of the high-resolution mode is outputted to the RAM for each line, as shown in Fig. 13. This makes it possible to increase the frequencies of the transfer clocks and reset clock by four times and decrease the storage time for each line to 1/4 without changing the transfer rate with respect to the RAM. Therefore, image reading operation can be performed with 1/4 the resolution at quadruple speed. Even if, a limitation is imposed on the DRAM access time on the digital circuit, and the same CCD output timings as those shown in Figs. 3 to 5 are required, one line can be read in a time 1/4 that of the high-resolution mode.

According to this embodiment, in the color CCD having the staggered arrangement in which the respective elements are shifted from each other by 1/2P in a staggered pattern, shift registers twice or more in number than photodiodes are arranged, and the transfer clock φ3 is prepared in addition to the transfer clocks φ1 and φ2. In addition, this CCD includes the driving control means for controlling the potential level of the shift register portion with the respective transfer clocks, the reset means which uses a reset pulse to read out image data from either the odd- or even-numbered element array in the low-resolution mode, and the transfer means for performing CCD transfer which allows addition of data in adjacent elements in the shift register portion.

In this case, image data is reset by the reset clock RS to read image data from either the odd- or even-numbered element array. In the low-resolution mode, the time required to read one line is shortened by adding data in elements in the shift register portion in the low-resolution mode without decreasing the S/N ratio.

As described above, in the read mode with a resolution 1/4 the basic resolution, the same original can be read in a time 1/4 that in the basic resolution mode with a storage time 1/2 that in the basic-resolution mode without decreasing the S/N ratio.

With the arrangement shown in Figs. 7 and 8, the first embodiment can be implemented by inputting the same signals as the signals φ2 and φ3.

That is, the operation in the high-resolution mode and low-resolution mode in the first embodiment shown in Figs. 3 and 5 can be implemented by using the arrangement of the second embodiment.

As has been described above, according to the above embodiment, the first and second element arrays are shifted from each other by a predetermined width, and data can be read from either the first or second element array. Therefore, data can be read out from either the odd- or even-numbered element array. This makes it possible to satisfy both the requirement for the balance between the storage times in the high-resolution mode and low-resolution mode and the requirement for high-speed reading operation in the low-resolution mode.

As many apparently widely different embodiments of the present invention can be made without departing from the scope thereof, it is to be understood that the invention is not limited to the specific embodiments thereof except as defined in the appended claims.

In order to provide an image processing apparatus which can satisfy both requirements for the balance between a storage time in a high-resolution mode and that in a low-resolution mode and high-speed reading operation in the low-resolution mode, the image processing apparatus of this invention includes an image sensing unit which includes a first element array having a plurality of photoelectric conversion elements arranged in a line, and a second element array shifted from the first element array by a predetermined distance in a main scanning direction and having a plurality of photoelectric conversion elements arranged in a line, and outputs signals of the first and second element arrays from a single output portion, and a driving unit having a first mode of reading signals from the second element array and continuously outputting the signals from the output portion, and a second mode of reading signals from the first element array and continuously outputting the signals from the output portion.

## Claims

1. An image processing apparatus comprising:
a first element array (1a, 3a, 5a) having a plurality of photoelectric conversion elements (s1, s3, ...S2n+1, S2n+3, ...) arranged in a line;
a second element array (2a, 4a, 6a) shifted from said first element array (1a, 3a, 5a) by a predetermined distance (1/2P) in a main scanning direction and having a plurality of photoelectric conversion elements (s2, s4, ...S2n+2, S2n+4, ...) arranged in a line;
a first CCD shift register (1c, 3c, 5c) for serially transferring signals from said first element array (1a, 3a, 5a); and
a second CCD shift register (2c, 4c, 6c) for serially transferring signals from said second element array (2a, 4a, 6a);
**characterized by** further comprising:
a pulse supply unit for supplying three types of pulses (ϕ1, ϕ2, ϕ3) simultaneously to said first and second CCD shift registers (1c, 2c, 3c, 4c, 5c, 6c), the pulses (ϕ1, ϕ2, ϕ3) are used for serially transferring signals in the first and second CCD shift registers; and
an output unit for outputting signals of the first (1a, 3a, 5a) and second element arrays (2a, 4a, 6a),
wherein each of said first CCD shift register (1c, 3c, 5c) and said second CCD shift register (2c, 4c, 6c) have three types of register cells: a first type of register cells receives signals from photoelectric conversion elements (s1, s2, ...) and shifts the received signals in response to the first pulses (ϕ1), a second type of register cells positioned between two adjacent first type register cells shifts signals received from the adjacent first type of register cells in response to the second or third pulses (ϕ2), and a third type of register cells positioned between two adjacent first type register cells shifts signals received from the adjacent first type of register cells in accordance with third pulses (ϕ3),
in a first mode, said pulse supply unit controls timing of outputting each of the first, second and third pulses so as to add up two signals outputted from two adjacent photoelectric conversion elements (s1+s3, s5+s7, ...) during serially transferring the signal in said first and second CCD shift registers, and
in a second mode, said pulse supply unit controls timing of outputting each of the first, second and third pulses so as to shift and output signals without adding two signals as is in the first mode.

2. The apparatus according to claim 1, further comprising:
a light source (101) for irradiating an original with light or making light pass through the original; and
imaging means (102, 103, 104, 105) for forming light reflected by the original into an image on said first and second element arrays (1a, 3a, 5a; 2a, 4a, 6a).

3. The apparatus according to claim 2, further comprising:
analog gain control means (201) for controlling an analog gain of a signal output from said first and second element arrays (1a, 3a, 5a; 2a, 4a, 6a); and
an analog/digital converter (202) for digitizing the signal controlled by said analog gain control means (201).

4. The apparatus according to claim 3, **characterized by** further comprising shading correction means (204) for performing shading correction for the digitized signal.

5. A processing method for an image processing apparatus including a first element array (1a, 3a, 5a) having a plurality of photoelectric conversion elements (s1, s3, ...S2n+1, S2n+3, ...) arranged in a line, a second element array (2a, 4a, 6a) shifted from the first element array (1a, 3a, 5a) by a predetermined distance (1/2P) in a main scanning direction and having a plurality of photoelectric conversion elements (s2, s4, ...S2n+2, S2n+4, ...) arranged in a line, a first CCD shift register (1c, 3c, 5c), and a second CCD shift register (2c, 4c, 6c), the processing method comprising the steps of:
transferring image signals from said first element array (1a, 3a, 5a) to said first CCD shift register (1c, 3c, 5c) and from said second element array (2a, 4a, 6a) to said second CCD shift register (2c, 4c, 6c), in parallel;
**characterized by**
serially transferring the image signals in said first and second CCD shift registers in accordance with three types of transfer pulses (φ1, φ2, φ3) each supplied simultaneously;
outputting signals of the first (1a, 3a, 5a) and the second element array (2a, 4a, 6a),
wherein each of said first CCD shift register (1c, 3c, 5c) and said second CCD shift register (2c, 4c, 6c) uses three types of register cells: a first type of register cells receives signals from photoelectric conversion elements (s1, s2, ...) and shifts the received signals in response to the first pulses (ϕ1), a second type of register cells positioned between two adjacent first type register cells shifts signals received from the adjacent first type of register cells in response to the second or third pulses (ϕ2), and a third type of register cells positioned between two adjacent first type register cells shifts signals received from the adjacent first type of register cells in accordance with third pulses (ϕ3),
performing a first transferring mode by controlling timing of outputting each of the first, second and third pulses so as to add up two signals outputted from two adjacent photoelectric conversion elements (s1, s3, ...S2n+1, S2n+3, ...) during serially transferring the signals in said first and second CCD shift registers with three types of the transferring pulses (φ1, φ2, φ3) having different phases from each other; and
performing a second transferring mode by controlling timing of outputting each of the first, second and third pulses so as to shift and output signals without adding two signals as in the first mode.

6. The apparatus according to claim 1, wherein at least one type of the transfer pulses (φ1, φ2, φ3) supplied by said pulse supply unit in the first transferring mode has a frequency which is twice as high as that of the transfer pulses (φ1, φ2, φ3) supplied in the second transferring mode.

7. The apparatus according to claim 1, wherein, in the second transferring mode, said pulse supply unit alternately repeats a first operation of continuously outputting signals from the first element array (1a, 3a, 5a), and a second operation of continuously outputting signals from the second element array (2a, 4a, 6a).

8. The apparatus according to claim 1, wherein, in the second transferring mode, said pulse supply unit continuously outputs signals from the first element array (1a, 3a, 5a).

## Patentansprüche

1. Bildverarbeitungsvorrichtung mit:
einem ersten Elementarray (1a, 3a, 5a), das eine Vielzahl von in einer Zeile angeordneten photoelektrischen Umwandlungselementen (s1, s3, ...s2n+1, s2n+3, ...) aufweist;
einem zweiten Elementarray (2a, 4a, 6a), das von dem ersten Elementarray (1a, 3a, 5a) um eine vorbestimmte Entfernung (1/2P) in einer Hauptabtastrichtung verschoben ist und eine Vielzahl von in einer Zeile angeordneten photoelektrischen Umwandlungselementen (s2, s4, ...s2n+2, s2n+4, ...) aufweist;
einem ersten CCD-Verschieberegister (1c, 3c, 5c) zum seriellen Übertragen von Signalen von dem ersten Elementarray (1a, 3a, 5a); und
einem zweiten CCD-Verschieberegister (2c, 4c, 6c) zum seriellen Übertragen von Signalen von dem zweiten Elementarray (2a, 4a, 6a);
weiterhin **gekennzeichnet durch**:
eine Impulsbereitstellungseinheit zum gleichzeitigen Bereitstellen von drei Arten von Impulsen (ϕ1, ϕ2, ϕ3) an die ersten und zweiten CCD-Verschieberegister (1c, 2c, 3c, 4c, 5c, 6c), wobei die Impulse (ϕ1, ϕ2, ϕ3) zum seriellen Übertragen von Signalen in die ersten und zweiten CCD-Verschieberegister verwendet werden; und
eine Ausgabeeinheit zum Ausgeben von Signalen der ersten (1a, 3a, 5a) und zweiten Elementarrays (2a, 4a, 6a),
wobei jedes des ersten CCD-Verschieberegisters (1c, 3c, 5c) und des zweiten CCD-Verschieberegisters (2c, 4c, 6c) drei Arten von Registerzellen aufweist: eine erste Art von Registerzellen empfängt Signale von photoelektrischen Umwandlungselementen (s1, s2, ...) und verschiebt die empfangenen Signale als Antwort auf die ersten Impulse (ϕ1), eine zweite Art von zwischen zwei benachbarten Registerzellen der ersten Art angeordneten Registerzellen verschiebt Signale, die von den benachbarten Registerzellen der ersten Art als Antwort auf die zweiten oder dritten Impulse (ϕ2) empfangen wurden, und eine dritte Art von zwischen zwei benachbarten Registerzellen der ersten Art angeordneten Registerzellen verschiebt Signale, die von den benachbarten Registerzellen der ersten Art gemäß dritten Impulsen (ϕ3) empfangen wurden, wobei
in einer ersten Betriebsart die Impulsbereitstellungseinheit eine Zeitgabe einer Ausgabe von jedem der ersten, zweiten und dritten Impulse derart steuert, um zwei von zwei benachbarten photoelektrischen Umwandlungselementen (s1+s3, s5+s7, ...) ausgegebene Signale während eines seriellen Übertragens des Signals in die ersten und zweiten CCD-Verschieberegister aufzuaddieren, und
in einer zweiten Betriebsart die Impulsbereitstellungseinheit eine Zeitgabe einer Ausgabe von jedem der ersten, zweiten und dritten Impulse derart steuert, um Signale ohne ein Addieren zweier Signale wie in der ersten Betriebsart zu verschieben und auszugeben.

2. Vorrichtung gemäß Anspruch 1, weiterhin mit:
einer Lichtquelle (101) zum Bestrahlen einer Vorlage mit Licht oder zum Durchtreten von Licht durch die Vorlage; und
einer Abbildungseinrichtung (102, 103, 104, 105) zum Bilden von durch die Vorlage reflektiertem Licht in ein Bild auf den ersten und zweiten Elementarrays (1a, 3a, 5a; 2a, 4a, 6a).

3. Vorrichtung gemäß Anspruch 2, weiterhin mit:
einer analogen Zuwachssteuerungseinrichtung (201) zum Steuern eines analogen Zuwachses einer Signalausgabe von den ersten und zweiten Elementarrays (1a, 3a, 5a; 2a, 4a, 6a); und
einer Analog/Digital-Umwandlungseinrichtung (202) zum Digitalisieren des durch die analoge Zuwachssteuerungseinrichtung (201) gesteuerten Signals.

4. Vorrichtung gemäß Anspruch 3, weiterhin **gekennzeichnet durch** eine Schattierungskorrektureinrichtung (204) zum Durchführen einer Schattierungskorrektur für das digitalisierte Signal.

5. Verarbeitungsverfahren für eine Bildverarbeitungsvorrichtung mit einem ersten Elementarray (1a, 3a, 5a), das eine Vielzahl von in einer Zeile angeordneten photoelektrischen Umwandlungselementen (s1, s3, ...s2n+1, s2n+3, ...) aufweist, einem zweiten Elementarray (2a, 4a, 6a), das von dem ersten Elementarray (1a, 3a, 5a) um eine vorbestimmte Entfernung (1/2P) in einer Hauptabtastrichtung verschoben ist und eine Vielzahl von in einer Zeile angeordneten photoelektrischen Umwandlungselementen (s2, s4, ...s2n+2, s2n+4, ...) aufweist, einem ersten CCD-Verschieberegister (1c, 3c, 5c) und einem zweiten CCD-Verschieberegister (2c, 4c, 6c), wobei das Verarbeitungsverfahren die Schritte aufweist:
paralleles Übertragen von Bildsignalen von dem ersten Elementarray (1a, 3a, 5a) zu dem ersten CCD-Verschieberegister (1c, 3c, 5c) und von dem zweiten Elementarray (2a, 4a, 6a) zu dem zweiten CCD-Verschieberegister (2c, 4c, 6c);
**gekennzeichnet durch**
serielles Übertragen der Bildsignale in die ersten und zweiten CCD-Verschieberegister gemäß drei Arten von Übertragungsimpulsen (φ1, φ2, φ3), wobei jeder gleichzeitig bereitgestellt wird;
Ausgeben von Signalen des ersten (1a, 3a, 5a) und des zweiten Elementarrays (2a, 4a, 6a),
wobei jedes des ersten CCD-Verschieberegisters (1c, 3c, 5c) und des zweiten CCD-Verschieberegisters (2c, 4c, 6c) drei Arten von Registerzellen verwendet: eine erste Art von Registerzellen empfängt Signale von photoelektrischen Umwandlungselementen (s1, s2, ...) und verschiebt die empfangenen Signale als Antwort auf die ersten Impulse (ϕ1), eine zweite Art von zwischen zwei benachbarten Registerzellen der ersten Art angeordneten Registerzellen verschiebt Signale, die von den benachbarten Registerzellen der ersten Art als Antwort auf die zweiten oder dritten Impulse (ϕ2) empfangen wurden, und eine dritte Art von zwischen zwei benachbarten Registerzellen der ersten Art angeordneten Registerzellen verschiebt Signale, die von den benachbarten Registerzellen der ersten Art gemäß dritten Impulsen (ϕ3) empfangen wurden,
Durchführen einer ersten Übertragungsbetriebsart durch ein derartiges Steuern einer Zeitgabe einer Ausgabe jeder der ersten, zweiten und dritten Impulse, um zwei von zwei benachbarten photoelektrischen Umwandlungselementen (s1, s3, ...s2n+1, s2n+3, ...) ausgegebene Signale während eines seriellen Übertragens der Signale in die ersten und zweiten CCD-Verschieberegister mit drei Arten der Übertragungsimpulse (φ1, φ2, φ3) aufzuaddieren, die voneinander unterschiedliche Phasen aufweisen; und
Durchführen einer zweiten Übertragungsbetriebsart durch ein derartiges Steuern einer Zeitgabe einer Ausgabe jeder der ersten, zweiten und dritten Impulse, um Signale ohne ein Addieren von zwei Signalen wie in der ersten Betriebsart zu verschieben und auszugeben.

6. Vorrichtung gemäß Anspruch 1, wobei zumindest eine Art der durch die Impulsbereitstellungseinheit bereitgestellten Übertragungsimpulse (φ1, φ2, φ3) in der ersten Übertragungsbetriebsart eine Frequenz hat, die zweimal so hoch ist wie die der in der zweiten Übertragungsbetriebsart bereitgestellten Übertragungsimpulse (φ1, φ2, φ3).

7. Vorrichtung gemäß Anspruch 1, wobei in der zweiten Übertragungsbetriebsart die Impulsbereitstellungseinheit abwechselnd einen ersten Betrieb einer fortlaufenden Ausgabe von Signalen aus dem ersten Elementarray (1a, 3a, 5a) und einen zweiten Betrieb einer fortlaufenden Ausgabe von Signalen aus dem zweiten Elementarray (2a, 4a, 6a) wiederholt.

8. Vorrichtung gemäß Anspruch 1, wobei in der zweiten Übertragungsbetriebsart die Impulsbereitstellungseinheit fortlaufend Signale von dem ersten Elementarray (1a, 3a, 5a) ausgibt.

## Revendications

1. Appareil de traitement d'image comportant :
- une première rangée d'éléments (1a, 3a, 5a) ayant de multiples éléments de conversion photoélectrique (s1, s3, ... S2n+1, S2n+3, ...) agencés suivant une ligne ;
- une seconde rangée d'éléments (2a, 4a, 6a) décalée de ladite première rangée d'éléments (1a, 3a, 5a) d'une distance prédéterminée (1/2P) dans une direction de balayage principal et ayant de multiples éléments de conversion photoélectrique (s2, s4, ... S2n+2, S2n+4, ...) agencés suivant une ligne ;
- un premier registre à décalage à CCD (1c, 3c, 5c) destiné à transférer en série des signaux provenant de ladite première rangée d'éléments (1a, 3a, 5a) ; et
- un second registre à décalage à CCD (2c, 4c, 6c) destiné à transférer en série des signaux provenant de ladite seconde rangée d'éléments (2a, 4a, 6a) ;
**caractérisé en ce qu'**il comporte en outre :
- une unité de fourniture d'impulsions destinée à fournir trois types d'impulsions (ϕ1, ϕ2, ϕ3) simultanément auxdits premier et second registres à décalage (1c, 2c, 3c, 4c, 5c, 6c), les impulsions (ϕ1, ϕ2, ϕ3) étant utilisées pour transférer en série des signaux dans les premier et second registres à décalage à CCD ; et
- une unité de sortie destinée à délivrer en sortie des signaux des première (1a, 3a, 5a) et seconde (2a, 4a, 6a) rangées d'éléments,
dans lequel chacun dudit premier registre à décalage CCD (1c, 3c, 5c) et dudit second registre à décalage CCD (2c, 4c, 6c) a trois types de cellules de registre : un premier type de cellules de registre reçoit des signaux provenant des éléments de conversion photoélectrique (s1, s2, ...) et décale les signaux reçus en réponse aux premières impulsions (ϕ1), un deuxième type de cellules de registre positionnées entre deux cellules de registre adjacentes du premier type décale des signaux reçus du premier type adjacent de cellules de registre en réponse aux deuxièmes ou troisièmes impulsions (ϕ2), et un troisième type de cellules de registre positionnées entre deux cellules de registre adjacentes du premier type décale des signaux reçus des cellules de registre adjacentes du premier type conformément à des troisièmes impulsions (ϕ3),
dans un premier mode, ladite unité de fourniture d'impulsions commande le temps de sortie de chacune des première, deuxième et troisième impulsions afin d'additionner deux signaux délivrés en sortie de deux éléments adjacents (s1+s3, s5+s7, ...) de conversion photoélectrique pendant un transfert en série du signal dans lesdits premier et second registres à décalage à CCD, et
dans un second mode, ladite unité de fourniture d'impulsions commande le temps de sortie de chacune des première, deuxième et troisième impulsions afin de décaler et délivrer en sortie des signaux sans addition de deux signaux comme c'est le cas dans le premier mode.

2. Appareil selon la revendication 1, comportant en outre :
- une source de lumière (101) destinée à irradier de lumière un original ou à faire passer de la lumière à travers l'original ; et
- un moyen de formation d'image (102, 103, 104, 105) destiné à former une image avec de la lumière réfléchie par l'original sur lesdites première et seconde rangées d'éléments (1a, 3a, 5a ; 2a, 4a, 6a).

3. Appareil selon la revendication 2, comportant en outre :
- un moyen (201) de commande de gain analogique destiné à commander un gain analogique d'un signal délivré en sortie desdites première et seconde rangées d'éléments (1a, 3a, 5a ; 2a, 4a, 6a) ; et
- un convertisseur analogique/numérique (202) destiné à numériser le signal commandé par ledit moyen (201) de commande de gain analogique.

4. Appareil selon la revendication 3, **caractérisé en ce qu'**il comporte en outre un moyen (204) de correction de la tache destiné à effectuer une correction de la tache pour le signal numérisé.

5. Procédé de traitement pour un appareil de traitement d'image comprenant une première rangée d'éléments (1a, 3a, 5a) ayant de multiples éléments de conversion photoélectrique (s1, s3, ... S2n+1, S2n+3, ...) agencés suivant une ligne, une seconde rangée d'éléments (2a, 4a, 6a) décalée de la première rangée d'éléments (1a, 3a, 5a) d'une distance prédéterminée (1/2P) dans une direction de balayage principal et ayant de multiples éléments de conversion photoélectrique (s2, S4, ... S2n+2, S2n+4, ...) agencés suivant une ligne, un premier registre à décalage à CCD (1c, 3c, 5c) et un second registre à décalage à CCD (2c, 4c, 6c), le procédé de traitement comprenant les étapes qui consistent :
- à transférer des signaux d'image de ladite première rangée d'éléments (1a, 3a, 5a) audit premier registre à décalage à CCD (1c, 3c, 5c) et de ladite seconde rangée d'éléments (2a, 4a, 6a) audit second registre à décalage à CCD (2c, 4c, 6c), en parallèle ;
**caractérisé par**
- le transfert en série des signaux d'image dans lesdits premier et second registres à décalage à CCD conformément à trois types d'impulsions de transfert (φ1, φ2, φ3) fournies chacune simultanément ;
- la délivrance en sortie de signaux des première (1a, 3a, 5a) et seconde (2a, 4a, 6a) rangées d'éléments,
dans lequel chacun dudit premier registre à décalage à CCD (1c, 3c, 5c) et dudit second registre à décalage à CCD (2c, 4c, 6c) utilise trois types de cellules de registre : un premier type de cellules de registre reçoit des signaux provenant des éléments de conversion photoélectrique (s1, s2, ...) et décale les signaux reçus en réponse aux premières impulsions (ϕ1), un deuxième type de cellules de registre positionnées entre deux cellules de registre adjacentes du premier type décale des signaux reçus du premier type adjacent de cellules de registre en réponse aux deuxièmes ou troisièmes impulsions (ϕ2), et un troisième type de cellules de registre positionnées entre deux cellules de registre adjacentes du premier type décale des signaux reçus des cellules de registre adjacentes du premier type conformément à des troisièmes impulsions (ϕ3),
- l'exécution d'un premier mode de transfert en commandant le temps de délivrance en sortie de chacune des première, deuxième et troisième impulsions afin d'additionner deux signaux délivrés en sortie de deux éléments adjacents de conversion photoélectrique (s1, s3, ... S2n+1, S2n+3, ...) pendant un transfert en série de signaux dans lesdits premier et second registres à décalage à CCD avec trois types d'impulsions de transfert (φ1, φ2, φ3) ayant entre eux des phases différentes ; et
- l'exécution d'un second mode de transfert en commandant le temps de délivrance en sortie de chacune des première, deuxième et troisième impulsions afin de décaler et délivrer en sortie des signaux sans additionner deux signaux comme dans le premier mode.

6. Appareil selon la revendication 1, dans lequel au moins un type des impulsions de transfert (φ1, φ2, φ3) fournies par ladite unité de fourniture d'impulsions dans le premier mode de transfert a une fréquence qui est deux fois plus élevée que celle des impulsions de transfert (φ1, φ2, φ3) fournies dans le second mode de transfert.

7. Appareil selon la revendication 1, dans lequel dans le second mode de transfert, ladite unité de fourniture d'impulsions répète alternativement une première opération de sortie en continu de signaux provenant de la première rangée d'éléments (1a, 3a, 5a), et une seconde opération de sortie en continu de signaux provenant de la seconde rangée d'éléments (2a, 4a, 6a).

8. Appareil selon la revendication 1, dans lequel, dans le second mode de transfert, ladite unité de fourniture d'impulsions délivre en continu en sortie des signaux provenant de la première rangée d'éléments (1a, 3a, 5a).
